# EUROPEAN PATENT APPLICATION

(11) **EP 2 381 014 A1**
(43) Date of publication of application: **26.10.2011**
(21) Application number: 10735705.5
(22) Date of filing: 15.01.2010
(51) Int. Cl.: C25B 1/24, B01D 53/68, B01D 53/77, C25B 9/00, C25B 15/08, F23G 7/06, H01M 8/00, H01M 8/06

(54) **SEMICONDUCTOR PRODUCTION EQUIPMENT INCLUDING FLUORINE GAS GENERATOR**

(30) Priority: 30.01.2009 JP 2009019091; 29.06.2009 JP 2009153164; 12.01.2010 JP 2010004268
(71) Applicant: Central Glass Company, Limited, Yamaguchi 755-0001 (JP)
(72) Inventor: MORI, Isamu, 5253, Oaza Okiube, Ube-shi Yamaguchi 755-0001 (JP); YAO, Akifumi, 5253, Oaza Okiube, Ube-shi Yamaguchi 755-0001 (JP); TANAKA, Kenji, 5253, Oaza Okiube, Ube-shi Yamaguchi 755-0001 (JP); MIYAZAKI, Tatsuo, 5253, Oaza Okiube, Ube-shi Yamaguchi 755-0001 (JP)
(74) Representative: Manitz, Finsterwald & Partner GbR
(86) International application number: PCT/JP2010/050389
(87) International publication number: WO 2010/087236

(57) **Abstract**

A semiconductor production equipment includes a fluorine gas generator, and a detoxification device for combusting a waste gas containing a fluorine-based gas. The fluorine gas generator is configured to electrolyze hydrogen fluoride in an electrolytic bath of a molten salt containing hydrogen fluoride to generate a main product gas whose major component is fluorine gas at an anode side and generate a by-product gas whose major component is hydrogen at a cathode side. The semiconductor production equipment further includes a lead-out line for introducing the by-product gas generated from the fluorine gas generator to the detoxification device. The detoxification device includes a mechanism for using the by-product gas sent to the detoxification device as a combustion agent.

## Description

### TECHNICAL FIELD

This invention relates to a device for generating fluorine gas under electrolysis, preferably the device for generating fluorine gas under hydrolysis, disposed close to a device used for production or the like of semiconductor or the like.

In production of semiconductor, treatments such as film formation, etching, diffusion and the like are made on a treated substrate such as a semiconductor wafer, a LCD substrate or the like, in which such treatments are carried out within a treatment chamber in which fluorine gas or the like is treated. Within the treatment chamber, for example, etching for a thin film such as a silicon film, a silicon oxide film or the like and cleaning for the inside of the treatment chamber are carried out. Fluorine gas introduced out from a fluorine gas generator (on-site type fluorine gas generator) disposed close to the treatment chamber is used for these treatments, to which attention has been paid.

As the fluorine gas generator, a generator using an electrolytic bath is known. In the generator using the electrolytic bath, by electrolyzing hydrogen fluoride from a molten salt containing hydrogen fluoride in an electrolytic bath, a main product gas whose major component is fluorine gas is generated at an anode side while a by-product gas whose major component is hydrogen is generated at a cathode side.

The by-product gas whose major component is hydrogen gas is combustible and explosive, and therefore it is required to be treated in the form raised in safety. For example, Patent Citation 1 discloses a method of diluting generated hydrogen gas with inert gas and discharging it out of a system. Additionally, Patent Citation 2 discloses a method of combusting hydrogen in an air stream containing oxygen.

### PRIOR ART CITATIONS

### PATENT CITATION

Patent Citation 1: Japanese Patent Provisional Publication No. 2005-97667
Patent Citation 2: Japanese Patent Provisional Publication No. 2005-224797

### SUMMARY OF THE INVENTION

Hydrogen gas by-produced by a fluorine gas generator is required to be safely treated; however, merely treating it is not good in resource efficiency and energy efficiency. An object of the present invention is to provide a method for effectively use a by-product gas containing, as a major component, hydrogen which has been hitherto treated upon being focusing on being safely treated, and a semiconductor production equipment in which the by-product gas is effectively used.

A semiconductor production equipment according to the present invention includes a fluorine gas generator; a lead-out line for introducing a main product gas generated from the generator and containing fluorine-based gas; a device including a treatment chamber connected to the lead-out line and for treating the main product gas; and a detoxification device for combusting a waste gas discharged from the device including the treatment chamber and containing a fluorine-based gas, which is characterized in that the fluorine gas generator is configured to electrolyze hydrogen fluoride in an electrolytic bath of a molten salt containing hydrogen fluoride to generate the main product gas whose major component is fluorine gas at an anode side and generate a by-product gas whose major component is hydrogen at a cathode side; the semiconductor production equipment further comprises a lead-out line for introducing the by-product gas generated from the fluorine gas generator to the detoxification device; and the detoxification device includes a mechanism for using the by-product gas sent to the detoxification device as a combustion agent.

Fluorine gas introduced into the treatment chamber of the device including the treatment chamber for carrying out production of a semiconductor, for example, a physical vapor-phase film formation device using sputtering, vacuum deposition or the like, a thermal CVD (chemical vapor deposition) device, a plasma CVD method device or the like is changed to a waste gas containing fluorine gas after making etching for a thin film, cleaning of the inside of the treatment chamber, and the like. The waste gas is required to be discharged out of the system upon being detoxified, so that the waste gas is sent from the treatment chamber to a detoxification equipment.

According to the present invention, detoxification is accomplished upon combustion of the waste gas. In order to promote the efficiency of combustion of the waste gas, the by-product gas whose major component is hydrogen and which has been hitherto merely subjected to a discarding treatment is introduced into the detoxification equipment and used as the combustion agent.

Hitherto hydrocarbon-based gas such as liquefied natural gas (referred to as LNG gas) whose major component is methane, liquefied petroleum gas (referred to as LPG gas) whose major components are propane, butane and the like has been used as a main combustion agent in a detoxification equipment for treating waste gas discharged from a semiconductor treatment device such as sputtering, CVD or the like.

An example of the combustion agent is hydrogen in addition to the above-mentioned LNG gas and LPG gas. Combustion velocity of hydrogen is ten times or more higher than that of natural gas such as methane gas or the like, and therefore hydrogen is excellent in ignition characteristics or the like of flame so as to be excellent as the combustion agent.

However, hydrogen is wide in stable combustion zone and high in combustion velocity as compared with natural gas, and therefore there is the fear of danger of explosion. As a result, it is a rare case that hydrogen is used as the combustion agent to be supplied to the detoxification equipment because operational load of maintenance such as treatment for a steel bottle supplying hydrogen is increased as compared with natural gas such as methane or the like in case of using hydrogen gas as the combustion agent.

The present invention has such advantages that the by-product gas whose major component is hydrogen is effectively used as the combustion agent without being discharged out of the system thereby attaining promotion of the efficiency of resource and promotion of the efficiency of energy, and additionally the combustion efficiency of the detoxification device is improved without providing to the detoxification equipment a steel cylinder or the like for hydrogen gas which steel cylinder is high in maintenance operational load.

Furthermore, the present invention is a method of detoxifying a by-product gas in a fluorine gas generator, and relates to a method of detoxifying a by-product gas in a fluorine gas generator configured to electrolyze hydrogen fluoride in an electrolytic bath of a molten salt containing hydrogen fluoride to generate a main product gas whose major component is fluorine gas at an anode side and generate the by-product gas whose major component is hydrogen at a cathode side. The method is characterized by including: a step of introducing the main product gas into a device including a treatment chamber; a step of adding the by-product gas to a waste gas which is discharged from the device including the treatment chamber and contains a fluorine-based gas; and a step of combusting both the waste gas and the by-product gas.

Furthermore, the present invention is a semiconductor production equipment including a fluorine gas generator, and characterized by including: a fluorine gas generator configured to electrolyze hydrogen fluoride in an electrolytic bath of a molten salt containing hydrogen fluoride to generate a main product gas whose major component is fluorine gas at an anode side and generate a by-product gas whose major component is hydrogen at a cathode side; a first lead-out line for introducing the main product gas containing fluorine gas, generated from the generator; a device connected to the first lead-out line and including a treatment chamber in which the main product gas is treated; a second lead-out line for introducing the by-product gas generated from the generator and containing hydrogen gas; a purification device connected to the second lead-out line and for lowering a hydrogen fluoride concentration in the by-product gas; a third lead-out line disposed to the purification device and for introducing purified hydrogen gas; and a fuel cell equipment connected to the third lead-out line and for generating electricity using the purified hydrogen gas as fuel, wherein electric power generated by the fuel cell equipment is used as an electric power source for the fluorine gas generator or a semiconductor treatment device used in combination with the fluorine gas generator.

Additionally, the above-mentioned purification device preferably includes a wet scrubber, and a dewatering tower whose temperature range is set to be not lower than boiling point of hydrogen and not higher than melting point of water. Further, the above-mentioned wet scrubber preferably includes at least one wet scrubber using alkaline solution.

### BRIEF DESCRIPTION OF DRAWINGS

Fig. 1 is a view showing a schematic central and essential section of a system of a semiconductor production equipment 1;
Fig. 2 is a view showing an essential section of examples of a detoxification equipment 4 and a scrubber 5;
Fig. 3 is a view showing a schematic central and essential section of the semiconductor production equipment using hydrogen as a fuel for a fuel cell; and
Fig. 4 is a schematic view of a purification device for purifying hydrogen gas.

### DETAILED DESCRIPTION

A semiconductor production equipment including a fluorine gas generator, according to the present invention is configured such that hydrogen gas which seems to be dangerous when contacted with fluorine gas is introduced into an equipment for detoxifying fluorine gas discharged from a treatment chamber in which fluorine gas or the like is treated. A by-product gas generated from the fluorine gas generator is effectively used as a combustion agent without being discharged out of a system, so as to be advantageous to attain promotion of efficiency of resource and of efficiency of energy.

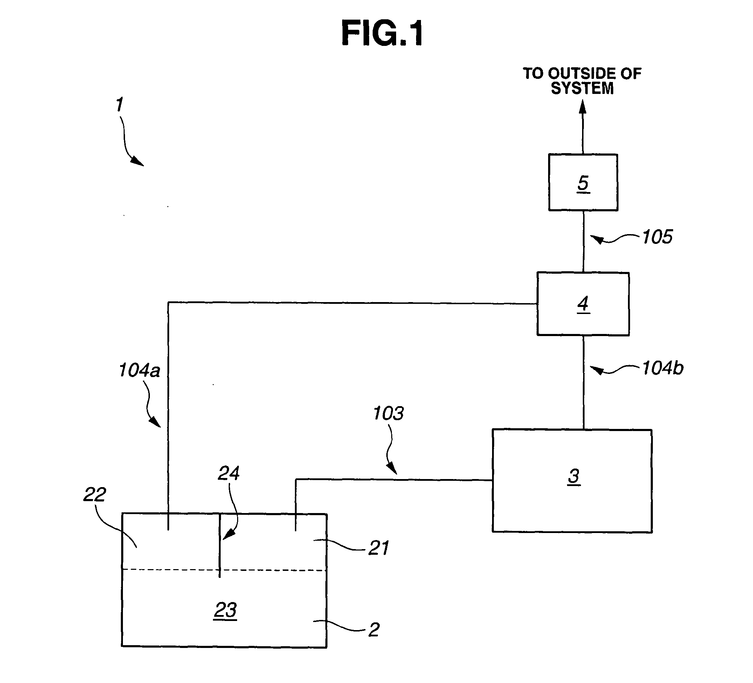

A preferred example of the semiconductor production equipment according to the present invention will be discussed with reference to drawings. Fig. 1 shows a schematic central and essential section of a system of the semiconductor production equipment according to the present invention. An electrolytic bath 23 of a molten salt containing hydrogen fluoride is formed in the fluorine gas generator 2. Anode and cathode (not shown) are inserted in the electrolytic bath 23. By making electrolysis through these, a main product gas whose major component is fluorine gas is generated at an anode side 21 while a by-product gas whose major component is hydrogen gas is generated at a cathode side 22. The main product gas and the by-product gas are separate from each other by a partition wall 24.

An example of the molten salt forming the electrolytic bath 23 is acid potassium fluoride or the like. The main product gas is introduced to a treatment chamber 3 in which the main product gas is treated, through a lead-out line 103 for introducing the main product gas. In the treatment chamber 3, treatments such as film formation, etching, diffusion and the like are made on a treated substrate such as a semiconductor wafer, a LCD substrate or the like in production of a semiconductor. During such a treatment, introduction or the like of the above-mentioned main product gas is made into the treatment chamber 3 thereby carrying out, for example, etching of a thin film such as a silicon film, a silicon oxide film or the like. Additionally, the above-mentioned main product gas may be introduced into the treatment chamber 3 in order to clean the treatment chamber 3.

The by-product gas is introduced into a detoxification equipment 4 through a lead-out line 104a for introducing the by-product gas to the detoxification equipment 4. To the detoxification equipment 4, a waste gas discharged from the treatment chamber 3 and containing fluorine-based gas is introduced through a lead-out line 104b for introducing the waste discharged from the treatment chamber 3 and containing the fluorine-based gas.

On the way of the lead-out line 103, a pump, pressure and flow rate regulating valves, a pressure gauge, a purification device and/or the like may be disposed if necessary. Additionally, on the way of the lead-out line 104a, a pump, pressure and flow rate regulating valves, a pressure gauge and/or the like may be disposed if necessary. On the way of the lead-out line 104b, a pump, a pressure and flow rate regulating valves, and the like may be disposed if necessary.

An equipment for trapping hydrogen fluoride, for example, a NaF absorption pipe or the like may be disposed on the way of the lead-out lines 103, 104a because hydrogen fluoride gas may be contained in each of the main product gas and the by-product gas according to vapor pressure of hydrogen fluoride contained in the electrolytic bath.

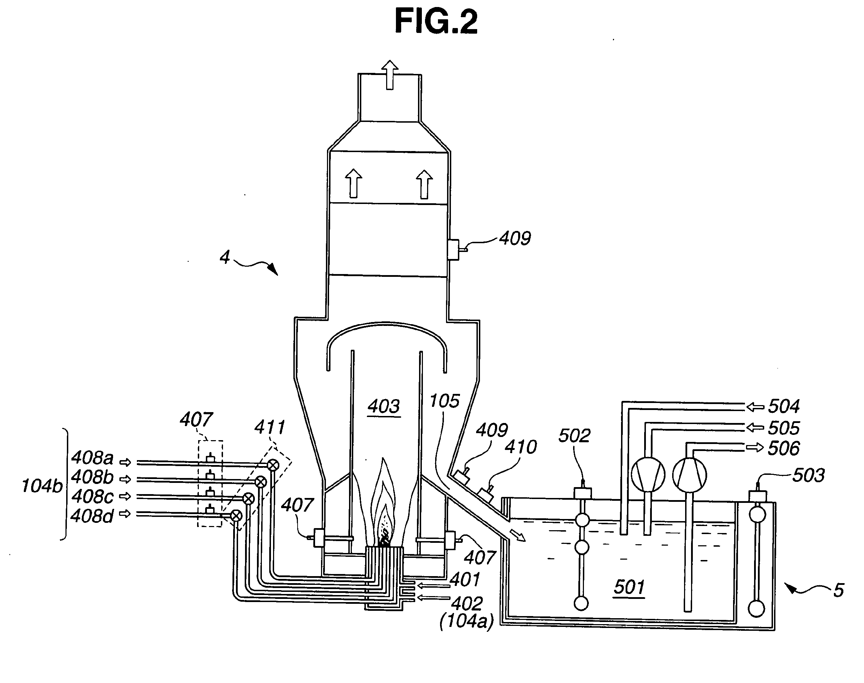

In the detoxification equipment 4, a waste gas containing fluorine-based gas can be detoxified under combustion. Fig. 2 illustrates an essential part of an example of the detoxification equipment 4. Additionally, Fig. 2 also illustrates an essential part of the example of a scrubber 5. Examples of the waste gas containing fluorine-based gas to be treated here are waste gases each of which contains halogen such as F₂ or the like, silicon fluoride such as SiF₄ or the like, boron fluoride such as BF₃, titanium fluoride such as TiF₄, tungsten fluoride such as WF₆ or the like, germanium fluoride such as GeF₄ or the like, carbon fluoride such as CF₄ or the like, arsenic fluoride such as AsF₅ or the like, phosphorous fluoride such as PF₅ or the like, sulfur fluoride such as SF₆ or the like, niobium fluoride such as NbF₅ or the like, selenium fluoride such as SeF₆ or the like, molybdenum fluoride such as MoF₄ or the like, and/or the like.

The waste gas containing fluorine-based gas is introduced into detoxification equipment 4 through the lead-out line 104b (represented as introduction lines 408a to 408d for the waste gas containing fluorine-based gas, in Fig. 2). An introduction amount of the waste gas containing fluorine-based gas to the detoxification equipment is regulated by pressure sensors 407, valves 411 and the like.

The by-product gas whose major component is hydrogen is introduced into the detoxification equipment 4 through the lead-out line 104a (represented as an introduction line 402 for the by-product gas, in Fig. 2). The combustion agent is introduced into the detoxification equipment 4 through an introduction line 401 and the introduction line 402 for combustion gas. As shown in Fig. 2, a burner is formed by the introduction lines 408a to 408d for the waste gas containing fluorine-based gas, the introduction line 401 for the combustion gas, the introduction line 402 for the by-product gas. The combustion agent is introduced from the introduction line 401 and ignited in a combustion chamber 403 thereby forming flame within the combustion chamber 403. In the example of Fig. 2, the burner and the combustion chamber 403 formed as described above correspond to a mechanist for using the by-product gas as the combustion agent. The above-mentioned by-product gas may be introduced through the introduction line 402 when ignited. Otherwise, the above-mentioned by-product gas may be introduced only through the introduction line 402 so that only this is used as the combustion agent to make ignition.

After formation of flame, the waste gas containing fluorine-based gas is introduced into the detoxification equipment 4 through the introduction lines 408a to 408d thereby making combustion of the waste gas. During making combustion of the waste gas, the introduction amount of each gas is regulated in accordance with indications from the pressure sensors 407, a temperature sensor 409, a pH sensor 410 and the like. Operation of the equipment according to the present invention may be made by using the combustion agent introduced through the introduction line 401 as a main agent for combustion while by using the above-mentioned by-product gas introduced through the introduction line 402 as a combustion auxiliary agent.

Examples of the combustion agent introduced through the introduction line 401 are methane gas, ethane gas, propane gas, butane gas, acetylene gas, hydrogen gas and the like. Additionally, a mixture of these gases may be used.

In combustion in the combustion chamber 403, hydrogen and oxygen react with each other to produce water while fluorine and hydrogen react with each other to produce hydrogen fluoride, thereby producing hydrofluoric acid aqueous solution. The aqueous solution is preferably detoxified and discharged out of the system. The aqueous solution is preferably introduced into a scrubber 5 through the lead-out line 105.

The scrubber shown in Fig. 2 includes a liquid tank 501, a liquid level sensor 502 and a liquid leak sensor 503. In accordance with indications from these sensors, a supply liquid such as water or the like is introduced through a liquid supply line 504. Additionally, an alkaline solution such as potassium hydroxide or the like is introduced through a liquid supply line 505 to neutralize the solution within the liquid tank 501, and a waste liquid is discharged out of the system through a lead-out line 506. The lead-out line may be provided with a pH sensor, in which the introduction amount of the alkaline solution through the line 505 may be regulated in accordance with an indication of the sensor.

While discussion has been made on an embodiment (hereinafter referred to as a first embodiment) in which hydrogen corresponding to the by-product gas is used as fuel for combustion-detoxification in the above, hydrogen corresponding to the by-product gas may be used as fuel for generation of electricity, thereby making it possible to effectively use the by-product gas.

In a conventional fluorine generator in which fluorine is generated by an electrolysis method, there is a problem that the fluorine gas generator is high in electric power consumption.

In view of this, the present inventors have obtained a knowledge that the by-product gas containing hydrogen by-produced at an electrolysis step is used as fuel and used for generation of electricity to obtain electric power, and the obtained electric power can be used for the fluorine gas generator.

Specifically, the knowledge is a method in which the by-product gas containing hydrogen generated at an electrolysis step is purified; the purified hydrogen is used as fuel for a fuel cell; and electric power generated by the fuel cell is used as electric power for the hydrogen fluoride generator.

Hereinafter, discussion will be made on an embodiment (hereinafter referred to as a second embodiment) in which hydrogen corresponding to the by-product gas is used for generation of electricity thereby effectively using the by-product gas.

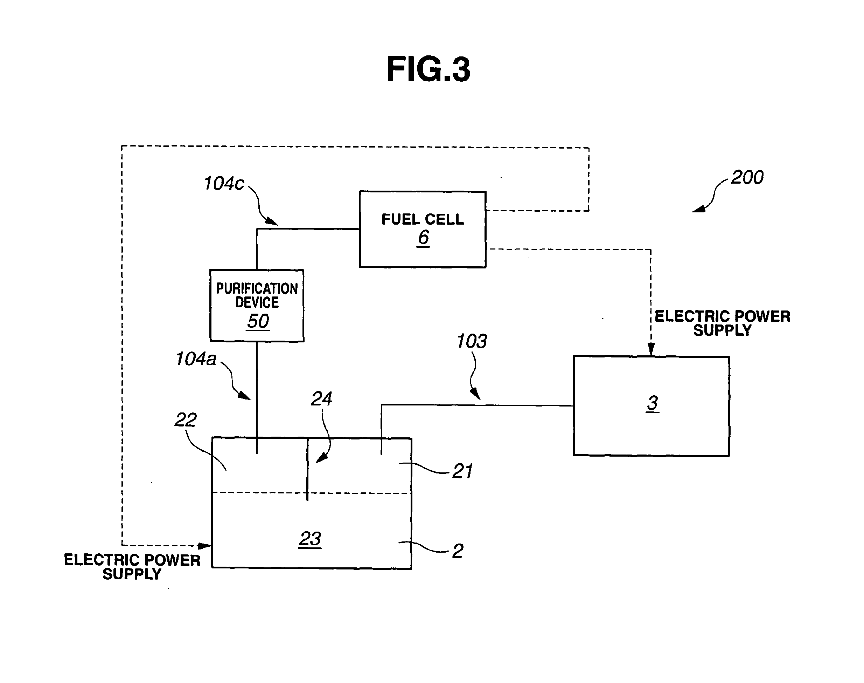

Fig. 3 shows a schematic central and essential section of the semiconductor production equipment in which hydrogen gas generated as the by-product gas in the fluorine gas generator is used as fuel for a fuel cell, according to the present invention.

Referring to Fig. 3, discussion will be made on a semiconductor production equipment 200 according to the second embodiment of the present invention. Hereinafter, discussion will be made around a point different from the above-mentioned first embodiment, so that the same reference numerals are assigned to the same arrangements in the first embodiment thereby omitting explanations.

The semiconductor production equipment 200 is arranged such that hydrogen gas produced in the fluorine gas generator 2 is supplied to a fuel cell equipment 6 to use hydrogen gas as fuel, and then electric power generated by the fuel cell equipment 6 is used as an electric power source for the fluorine gas generator 2.

As the fluorine gas generator 2, one similar to the above-mentioned fluorine gas generator 2 can be applied.

The lead-out line 103 for introducing the main product gas containing fluorine gas is connected to the anode side 21 of the electrolytic bath 23 in the fluorine gas generator 2. Additionally, the treatment chamber 3 for treating the main product gas is disposed downstream of the lead-out line 103.

The lead-out line 104a for introducing the by-product gas containing hydrogen is connected to the cathode side 22 of the electrolytic bath 23 in the fluorine gas generator 2. Additionally, a purification device 50 for removing impurities in the by-product gas containing hydrogen to purify hydrogen gas is disposed downstream of the lead-out line 104a. Further, the purification device 50 is provided with a lead-out line 104c for introducing hydrogen gas purified by the purification device 50. The fuel cell equipment 6 is disposed downstream of the lead-out line 104c so as to be supplied with purified hydrogen gas.

The fuel cell equipment 6 is connected to an electric power source (not shown) for the electrolytic bath in the fluorine gas generator 2. Additionally, the fuel cell equipment 6 may be connected to an electric power source for the treatment chamber 3 in which production of semiconductor is made under CVD, sputtering or the like.

Next, discussion will be made on the purification device 50.

Hydrogen fluoride is contained in hydrogen gas generated as the by-product gas in the fluorine gas generator, according to the vapor pressure of hydrogen fluoride contained in the electrolytic bath, and therefore it is required to remove hydrogen fluoride in hydrogen gas. The purification device 50 is a device for removing impurities contained in hydrogen gas, particularly hydrogen fluoride.

A method for removing hydrogen fluoride in hydrogen gas is not particularly limited as far as it is a method by which hydrogen fluoride gas can be removed, in which examples of the method are a method of using a wet scrubber (waste gas treatment device) which uses water or alkaline solution, a method of using an absorption tower filled with sodium fluoride (NaF) or the like as a chemical for adsorbing hydrogen fluoride, and the like.

Both the method of using the wet scrubber and the method of using the absorption tower filled with the medicine such as NaF or the like are applicable to the second embodiment. However, in the method of using the wet scrubber, since a solution for treating gas is liquid, a replacement frequency for the chemical is small as compared with a case of using a solid chemical such as NaF or the like, thereby making it possible to treat more gas. Accordingly, using the wet scrubber is particularly preferable.

Hereinafter, discussion will be made on the purification device using the wet scrubber as the purification device.

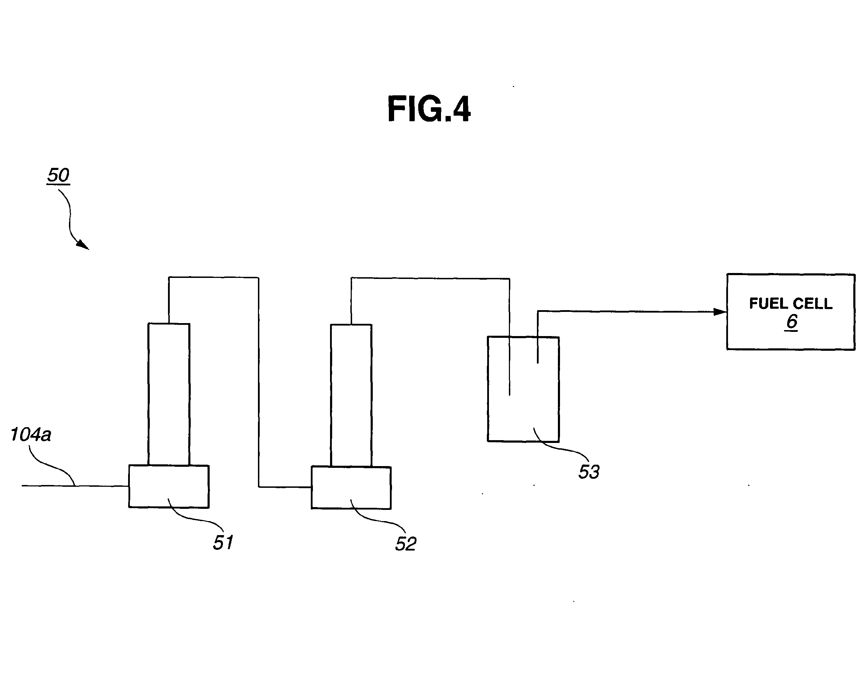

Fig. 4 is a schematic illustration of the purification device for purifying hydrogen gas generated as the by-product gas. Hereinafter, referring to Fig. 4, discussion will be made on the purification device 50.

A water scrubber 51 at a first stage and an alkali scrubber 52 at a second stage are sequentially disposed downstream of the lead-out line 104a for introducing the by-product gas containing hydrogen, as the wet scrubber. Additionally, a dewatering tower 53 is disposed at the latter stage of and sequentially to the wet scrubber.

In order to sufficiently remove hydrogen fluoride in the by-product gas, it is preferable to provide the alkali scrubber 52 at the latter stage of the water scrubber 51 as the wet scrubber; however, it is possible to accomplish purification by using only the alkali scrubber 52.

As alkaline solution to be used for the wet scrubber, sodium hydroxide (KOH) solution, sodium hydroxide (NaOH) solution or the like can be used. In case of using the NaOH solution, sodium fluoride (NaF) will deposit as a neutralization treatment is made, so that there may arise a case where scrubber solution becomes difficult to circulate. Accordingly, using the KOH solution is particularly preferable.

It is preferable to set a temperature within the dewatering tower 53 at a level of not lower than the boiling point (-252.78 °C) of hydrogen and of not higher than the melting point (0 °C) of water.

Temperature control within the dewatering tower is not particularly limited as far as the temperature within the dewatering tower 53 can be controlled, in which examples are a method of cooling with liquid argon or liquid nitrogen, a method of using dry ice, a method of using a heating and cooling device using a heating medium or a cooling medium, and the like.

Further, an absorption tower (not shown) accommodating thereinside molecular sieve may be disposed downstream of the dewatering tower 53. Additionally, calcium oxide (CaO), activated alumina (A1₂O₃) or the like for adsorbing a small amount of hydrogen fluoride may be disposed upstream of the molecular sieve and in addition to the molecular sieve, within the adsorption tower.

The fuel cell to be used in the present invention is not particularly limited as far as it is of the type wherein hydrogen is used as fuel, in which examples of it are a polymer electrolyte membrane fuel cell, a phosphoric-acid fuel cell, and the like.

The electric power obtained by the fuel cell is not only used for the electric source of the fluorine generator but also used for the electric source of a semiconductor treatment device used in combination with the fluorine gas generator, such as CVD, sputtering or the like.

According to the above embodiment, effects discussed below are obtained.

According to the second embodiment according to the present invention, the fluorine gas generator is provided with the purification device for purifying hydrogen gas generated as the by-product gas and the fuel cell equipment which uses the purified hydrogen gas as fuel, thereby making it possible to generate electric power by effectively using the by-produced hydrogen gas as fuel for the fuel cell equipment without discharging the by-produced hydrogen gas out of the system.

Further, by using the electric power generated by the fuel cell equipment as the electric power source of the fluorine gas generator and of the semiconductor treatment device used in combination with the fluorine gas generator, it becomes possible to provide the semiconductor production equipment which can effectively use hydrogen gas generated in the fluorine gas generator.

### EXPLANATION OF REFERENCE

- 1, 200: semiconductor production equipment

- 2: fluorine gas generator
- 21: anode side
- 22: cathode side
- 23: electrolytic bath
- 24: partition wall
- 3: treatment chamber in which main product gas is treated
- 4: detoxification equipment
- 50: purification device
- 6: fuel cell equipment
- 51: water scrubber
- 52: alkali scrubber
- 53: dewatering tower
- 103: lead-out line for introducing main product gas
- 104a: lead-out line for introducing by-product gas to detoxification equipment 4

## Claims

1. A semiconductor production equipment comprising:
a fluorine gas generator;
a lead-out line for introducing a main product gas generated from the generator and containing fluorine-based gas;
a device including a treatment chamber connected to the lead-out line and for treating the main product gas; and
a detoxification device for combusting a waste gas discharged from the device including the treatment chamber and containing a fluorine-based gas,
**characterized in that** the fluorine gas generator is configured to electrolyze hydrogen fluoride in an electrolytic bath of a molten salt containing hydrogen fluoride to generate the main product gas whose major component is fluorine gas at an anode side and generate a by-product gas whose major component is hydrogen at a cathode side; the semiconductor production equipment further comprises a lead-out line for introducing the by-product gas generated from the fluorine gas generator to the detoxification device; and the detoxification device includes a mechanism for using the by-product gas sent to the detoxification device as a combustion agent.

2. A method of detoxifying a by-product gas in a fluorine gas generator configured to electrolyze hydrogen fluoride in an electrolytic bath of a molten salt containing hydrogen fluoride to generate a main product gas whose major component is fluorine gas at an anode side and generate the by-product gas whose major component is hydrogen at a cathode side, **characterized by** comprising:
a step of introducing the main product gas into a device including the treatment chamber;
a step of adding the by-product gas to a waste gas which is discharged from the device including the treatment chamber and contains a fluorine-based gas; and
a step of combusting both the waste gas and the by-product gas.

3. A semiconductor production equipment including a fluorine gas generator, **characterized by** comprising:
a fluorine gas generator configured to electrolyze hydrogen fluoride in an electrolytic bath of a molten salt containing hydrogen fluoride to generate a main product gas whose major component is fluorine gas at an anode side and generate a by-product gas whose major component is hydrogen at a cathode side;
a first lead-out line for introducing the main product gas containing fluorine gas, generated from the generator;
a device connected to the first lead-out line and including a treatment chamber in which the main product gas is treated;
a second lead-out line for introducing the by-product gas generated from the generator and containing hydrogen gas;
a purification device connected to the second lead-out line and for lowering a hydrogen fluoride concentration in the by-product gas;
a third lead-out line disposed to the purification device and for introducing purified hydrogen gas; and
a fuel cell equipment connected to the third lead-out line and for generating electricity using the purified hydrogen gas as fuel,
wherein electric power generated by the fuel cell equipment is used as an electric power source for the fluorine gas generator or a semiconductor treatment device used in combination with the fluorine gas generator.

4. A semiconductor production equipment as claimed in Claim 3, wherein the purification device includes a wet scrubber, and a dewatering tower whose temperature range is set to be not lower than boiling point of hydrogen and not higher than melting point of water.

5. A semiconductor production equipment as claimed in Claim 4, wherein the wet scrubber includes at least one wet scrubber using alkaline solution.
